# EUROPEAN PATENT APPLICATION

(11) **EP 2 485 502 A1**
(43) Date of publication of application: **08.08.2012**
(21) Application number: 12159474.1
(22) Date of filing: 17.12.2004
(51) Int. Cl.: H04N 21/8543

(54) **Component identification method and targeting method using the same**

(30) Priority: 23.03.2004 KR 20040019533; 24.06.2004 KR 20040047853
(62) Divisional of application: 04808478.4
(71) Applicant: Electronics and Telecommunications Research Institute, Daejeon-city 305-350 (KR); Konkuk University Industrial Cooperation Corp., Seoul 143-701 (KR)
(72) Inventor: Lee, Hee-Kyung, Daejon 302-745 (KR); Kim, Jae-Gon, Daejon 302-120 (KR); Choi, Jin-Soo, Daejon 305-313 (KR); Kim, Jin-Woong, Daejon 305-761 (KR); Kang, Jung-Won, Seoul 142-805 (KR); Yoon, Kyoung-ro, Seoul 134-271 (KR)
(74) Representative: Betten & Resch

(57) **Abstract**

The present invention relates to a component identification method using an instance metadata identifier with a contents reference identifier (CRID) and a targeting method using the same. The present invention is a method for identifying components having identical contents and different bit expressions by assigning an identical CRID to each of the components, assigning different instance metadata identifiers to each of the components and using the instance metadata identifiers with the CRID. Also, the present invention is a method for identifying components having identical contents, identical bit expressions and different locations by assigning different instance metadata identifiers to each of the components and listing the instance metadata identifiers in a package metadata having corresponding condition of an intended targeting. Accordingly, the present invention provides effective targeting by automatically matching characteristics described in a package to a usage environment.

## Description

### Technical Field

The present invention relates to a component identification method for providing effective targeting.

### Background Art

According to digitalization of broadcasting, a broadcasting environment has been rapidly changed for providing multi-media broadcasting services through multiple channels to various receiving terminals capable of two-way broadcasting service by interlocking with a broadcasting communication network. Viewers want not only to passively receive a broadcasting program through limited channels but also to actively participate to a broadcasting service. Also, the viewers want to receive and to watch desired broadcasting programs whenever the viewers want.

That is, the broadcasting environment evolves into a complicated, diversified and personalized broadcasting environment. A customized broadcasting enables that a user consumes provided broadcasting contents whenever and wherever the user wants according to user's tastes by using various terminal in the complicated, diversified and personalized broadcasting environment. The customized broadcasting provides customized broadcasting contents according to a user's taste, a functionality of a terminal, a network characteristic and a nature environment such as a time, a place and a user's mood.

A standard of the customized broadcasting is divided to a phase 1 (TVA-1) and a phase 2 (TVA-2) according to an expected system environment and a main function to be provided. The TVA-1 is a standard for providing application services for searching, selecting, acquiring and consuming of audio/video (AV) contents based on a personal digital recorder (PDR) in an environment where main broadcasting program is transmitted through a one-way broadcasting channel and additional metadata is obtained through two-way network. The TVA-2 is a standard for providing content sharing between various terminals in a home network environment and a targeting service providing contents according to various usage environments by expanding a consuming environment of TVA-1 which is the one-way broadcasting channel and two-way network. The TVA-2 is also standards for providing not only TVA-1 audio and video (AV) type contents but also other various types of contents.

The targeting is an adaptive content service for adaptively providing contents to each of users according to not only the user's preference but also a usage environment such as a terminal and a network condition. For example, if there are two terminals i.e., one terminal including a MP3 decoder and another terminal having a wave decoder, a package metadata provider provide two types of components with two different formats according to a decoder type of each terminal although the components are identical. The package is a unit of selection combined with an AV program and various media components. The package has same notation of "digital item" in MPEG-21.

Under the above described scenario, a MP3 file format component has a content reference identifier (CRID) identical to the wave file format component because both components have identical contents. However, the both components have different contents instance having different bit expression. Although the both components have different bit expression, same CRID is assigned to the both components having identical contents regardless of a user environment conditions.

Table 1 shows a package when a component is only identified by a CRID.

**Table 1**

| |
|---|
| <Component> |
| <Conditionrequire="Audio_WAV"/> |
| <Resource mimeType="audio/wav" crid="crid://www.imbc.com/ EngScriptperPhrase/FirstPhrase"/> |
| </Component> |
| <Component> |
| <Condition require="Audio_MP3 "/> |
| <Resource mimeType="audio/mp3" crid="crid:Hwww.imbc.com/ EngScriptperPhrase/FirstPhrase"/> |
| </Component> |
| </Item> |

As described above, a conventional identification method using the CRID as an identifier of a component does not support the targeting which automatically matches appropriate component to given condition. Instead of supporting the targeting, the appropriate components are selected by comparing all locators of metadata having identical CRID for given condition. Also, it requires a user or an agent to intervene in selection of the appropriate components. Accordingly, it is necessary to identify component having same contents and different bit expression for the targeting. Also, it is necessary to provide a scheme to identify components when the components having identical contents, identical bit expression and different locations.

### Disclosure

### Technical Problem

It is, therefore, an object of the present invention to provide a component identification method using instance metadata identification with a contents reference identifier (CRID) and a targeting method for using the same.

### Technical Solution

In accordance with one aspect of the present invention, there is provided a package providing method for providing a package which is a set of components to a user terminal, comprising the steps of generating metadata including a content reference identifier (CRID) for identifying the components and an instance metadata identifier (IMI) for identifying the content reference identifier and transmitting the metadata to the user terminal.

In accordance with another aspect of the present invention, there is provided a package providing apparatus for providing a package which is a set of components to a user terminal, comprising a generating unit for generating metadata including a content reference identifier (CRID) for identifying the components and an instance metadata identifier (IMI) for identifying the content reference identifier and a transmitting unit for transmitting the metadata to the user terminal.

In accordance with still another aspect of the present invention, there is provided a package consuming method for consuming a package which is a set of components, comprising the steps of receiving metadata including a content reference identifier (CRID) for identifying the components and an instance metadata identifier (IMI) for identifying the content reference identifier and acquiring the components using the content reference identifier and the instance metadata identifier of the metadata.

In accordance with further still another aspect of the present invention, there is provided a user terminal for consuming a package which is a set of components, comprising a receiving unit for receiving metadata. including a content reference identifier (CRID) for identifying the components and an instance metadata identifier (IMI) for identifying the content reference identifier and an acquiring unit for acquiring the components using the content reference identifier and the instance metadata identifier of the metadata.

In accordance with further still another aspect of the present invention, there is provided a metadata for providing a package which is a set of components, comprising a content reference identifier (CRID) for identifying the components and an instance metadata identifier (IMI) for identifying the content reference identifier.

### Advantageous Effects

A method for identifying components having identical contents in accordance with the present invention automatically matches characteristics described in a package to a condition of usage environment. Therefore, the method of the present invention provides effective targeting.

### Description of Drawings

The above and other objects and features of the present invention will become apparent from the following description of the preferred embodiments given in conjunction with the accompanying drawings, in which:
Fig. 1 is a diagram illustrating a targeting service providing system in accordance with the present invention; and
Fig. 2 shows a tree structure including a contents reference identifier (CRID) , an instant metadata identifier and a locator in a content referencing in accordance with the present invention.

### Best Mode for the Invention

Other objects and aspects of the invention will become apparent from the following description of the embodiments with reference to the accompanying drawings, which is set forth hereinafter.

A component may have different bit expression although the component has identical content. The bit expression is an expression type of contents of the component. The contents can be expressed by various expression types such as such as a coding formation i.e., mp3, wav, a bit rate or an aspect ratio. In the present invention, an instance metadata identifier (imi) is used with a content reference identifier (CRID) for identifying components having identical contents but different bit expressions. Unique imi is assigned to each of the components having different bit expressions.

By using a component identifier of the present invention, it is possible that a user identifies instances of components having identical contents with different bit expression and also obtains a component having a bit expression matched to a condition. It is included in a dependent identification using an instance metadata identifier.

Table. 2 shows a portion of a package metadata using an instance metadata identifier with a CRID as a component identifier. As shown in Table. 2, components having identical contents with different coding format such as wav or mp3 can be identified based on differently assigned imis i.e., imi-1, imi:2, with same CRID to each of the components.

**Table. 2**

| | | |
|---|---|---|
| <Item> | | |
| | <Component> | |
| | | <Condition require="Audio_WAV"/> |
| | | <Resource mimeType="audio/wav" **crid=**"crid://ww.imbc.com/ |
| | | EngScriperPhrase/FirstPhrase" **imi=**"imi:1"/> |
| | </Component> | |
| | <Component> | |
| | | <Condition require="Audio_MP3"/> |
| | | <Resource mimeType="audio/mp3" **crid=**"crid://www.imbc.com/ |
| | | EngScripterPhrase/FirstPhrase" **imi=**"imi:2"/> |
| | </Component> | |
| </Item> | | |

A targeting method using the above described component identifying method will be explained hereinafter.

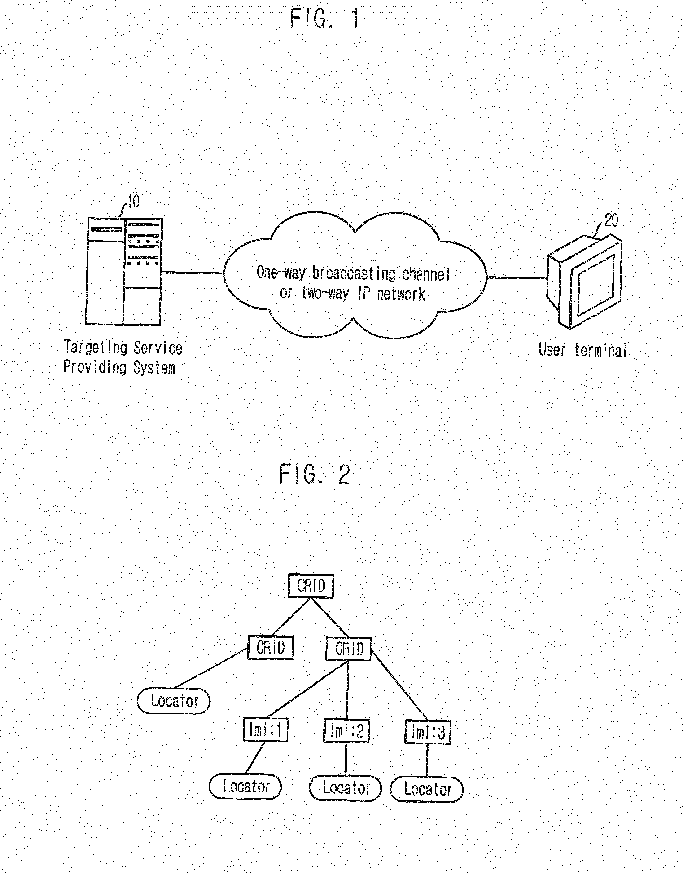

Fig. 1 is a diagram illustrating a targeting service providing system in accordance with a preferred embodiment of the present invention. The targeting service providing system 10 generates a package according to a condition of a usage environment. The package (or package metadata) is composed with an extensible mark-up language (XML) document as shown in Table. 2. If there are components having identical contents with different bit expressions, the targeting service providing system 10 uses an instance metadata identifier with a CRID as a component identifier. That is, unique instance metadata identifier is assigned to each of the components having identical contents with different bit expressions with the CRID.

The package metadata composed of a XML document is fragmented. The fragmentation of the package metadata is a step for dividing the package metadata to a plurality of fragmented units for independently transmitting, processing and updating the divided package metadata. After fragmentation, the fragmented package metadata is encoded and encapsulated. The encapsulation is a step for grouping the encoded fragmentized package metadata for transmitting. The encapsulated package metadata is transmitted to a user terminal 20 by using a one-way broadcasting system or a two-way system using an internet protocol (IP) network.

The user terminal 20 automatically or manually selects a component according to a usage environment i.e., a user's taste, a characteristic of the user terminal and a characteristic of the network among components included in a selected package. The selected component is obtained and consumed by a content referencing mechanism of a TVA-1 standard based on a CRID and an instance metadata identifier of the selected component.

As described above, the instance metadata identifier with the CRID is also used not only for generating a package in the targeting service providing system but also for selecting a component according to the usage environment of the user terminal.

Meanwhile, the component having same contents and same bit expression may be located different locations. Fig. 2 shows a tree structure of CRID, instance metadata identifier and locator in a content referencing in accordance with a preferred embodiment of the present invention. As shown in FIG. 2, the instance metadata identifier is unique in a region of an assigned CRID and is only one per a pair of a CRID and a locator. Because of such a characteristic of the instance metadata identifier, component instances having identical characteristics i.e., same bit expression, cannot be identified from other component instances by single instance metadata identifier.

If there are components located different positions although the components have identical contents and identical bit expressions, a component locator is identified by using the instance metadata identifier when the package is generated in the present invention. The instance metadata identifiers for components having identical contents, identical bit expression and different locations are listed in a package metadata having corresponding conditions in case of using an intended targeting as shown in Table 3.

Table 3 shows a portion of a package metadata where a multiple instance metadata identifier is used and Table. 4 shows a schema of a resource referencing a component element. In Table 3, instance metadata identifiers imi:1 and imi:2 are assigned to the two components having identical contents, identical format i.e., wav and different locations. The instance metadata identifiers imi:1 and imi:2 are listed in a package metadata having corresponding conditions in case of using intended targeting. Accordingly, components having identical contents and identical bit expression are grouped as one component.

**Table 3**

| |
|---|
| <Item> |
| <Component> |
| <Condition require="Audio_WAV"/> |
| <Resource mimeType="audio/wav" crid="crid://www.imbc.com/ EngScriperPhrase/FirstPhrase" imi="imi:1 imi:2"/> |
| </Component> |
| <Component> |
| <Condition require="Audio_MP3"/> |
| <Resource mimeType="audio/mp3" crid="crid:Hwww.imbc.com/ EngScriptperPhrase/FirstPhrase" imi="imi:3 "/> |
| </Component> |
| </Item> |

**Table 4**

| |
|---|
| <element name="Resource"> |
| <complexType mixed="true"> |
| <attribute name="mimeType" type="string" use="required"/> |
| <attribute name="crid" type="tva:CRIDType" use="required"/> |
| <attribute name="imi" type="tva:InstanceMetadataIRefsType" use="optional"/> |
| </complexType> |
| </element> |

Hereinafter, a targeting method using the component identification method will be explained with reference to Fig. 1.

The targeting service providing system 10 generates a package according to a condition of a usage environment. The package or the package metadata is composed of an extensible mark-up language (XML) document as shown in Table. 3. If there are components having identical contents, identical bit expression and different locations, the targeting service providing system 10 uses the instance metadata identifier with the CRID as the component identifier. The instance metadata identifiers assigned to the components having same contents, same bit expression and different locations are listed in the package metadata having corresponding conditions.

The package metadata composed of the XML document is fragmented. The fragmented package metadata is encoded and encapsulated. The encapsulated package metadata is transmitted to the user terminal 20 by using a one-way broadcasting system or a two-way system through the IP network.

The user terminal 20 manually or automatically selects a component according to usage environment such as a personal taste, a characteristic of a terminal and a characteristic of network among components included in the selected package. The selected component is obtained and consumed based on a content reference mechanism of the TVA-1 standard by using corresponding CRID and instance metadata identifier. During selection, a component having an instance metadata identifier voluntary selected among instance metadata identifiers listed.

The above described methods can be implemented as a program and the program can be stored in a computer readable recording medium.

The present application contains subject matter related to Korean patent application No. 2003-filed in the Korean Intellectual Property office on October 2, 2003, the entire contents of which is incorporated herein by reference.

While the present invention has been described with respect to certain preferred embodiments, it will be apparent to those skilled in the art that various changes and modifications may be made without departing from the scope of the invention as defined in the following claims.

## Claims

1. A package providing method for providing a package which is a set of components to a user terminal, comprising the steps of:
generating metadata including a content reference identifier (CRID) for identifying the components and an instance metadata identifier (IMI) for identifying the content reference identifier; and
transmitting the metadata to the user terminal.

2. The package providing method as recited in claim 1, wherein the instance metadata identifier identifies locations of the components.

3. The package providing method as recited in claim 1, wherein the instance metadata identifier identifies different bit expression instances of the components.

4. The package providing method as recited in claim 3, wherein the bit expression is any one selected from a group consisting of a coding format, a bit rate and an aspect ratio.

5. The package providing method as recited in claim 3, wherein the components are a plurality of components having identical contents and the content reference identifier is identical to the plurality of components.

6. The package providing method as recited in claim 1, wherein instances of the components are located in different locations.

7. The package providing method as recited in claim 6, wherein the instance metadata identifier is listed in the metadata.

8. The package providing method as recited in claim 6, wherein the components are a plurality of components having identical contents and the content reference identifier is identical to the plurality of components.

9. The package providing method as recited in claim 1, further comprising the step of fragmenting the generated metadata to a plurality of fragmented metadata for independently transmitting, processing and updating the fragmented metadata.

10. The package providing method as recited in claim 9, further comprising the step of encapsulating the fragmented metadata.

11. The package providing method as recited in claim 10, wherein the encapsulated metadata is transmitted by using a one-way broadcasting system or two-way system through an internet protocol (IP) network.

12. A package providing apparatus for providing a package which is a set of components to a user terminal, comprising:
a generating unit for generating metadata including a content reference identifier (CRID) for identifying the components and an instance metadata identifier (IMI) for identifying the content reference identifier; and
a transmitting unit for transmitting the metadata to the user terminal.

13. The package providing apparatus as recited in claim 12, wherein the instance metadata identifier identifies locations of the components.

14. The package providing apparatus as recited in claim 12, wherein the instance metadata identifier identifies different bit expression instances of the components.

15. The package providing apparatus as recited in claim 14, wherein the bit expression is any one selected from a group consisting of a coding format, a bit rate and an aspect ratio.

16. The package providing apparatus as recited in claim 14, wherein the components are a plurality of components having identical contents and the content reference identifier is identical to the plurality of components.

17. The package providing apparatus as recited in claim 12, wherein instances of the components are located in different locations.

18. The package providing apparatus as recited in claim 17, wherein the instance metadata identifier is listed in the metadata.

19. The package providing apparatus as recited in claim 17, wherein the components are a plurality of components having identical contents and the content reference identifier is identical to the plurality of components.

20. The package providing apparatus as recited in claim 12, further comprising a fragmenting unit for fragmenting the generated metadata to a plurality of fragmented metadata for independently transmitting, processing and updating the fragmented metadata.

21. The package providing apparatus as recited in claim 20, further comprising as encapsulating unit for encapsulating the fragmented metadata.

22. The package providing apparatus as recited in claim 21, wherein the encapsulated metadata is transmitted by using a one-way broadcasting system or two-way system through an internet protocol (IP) network.

23. A package consuming method for consuming a package which is a set of components, comprising the steps of :
receiving metadata including a content reference identifier (CRID) for identifying the components and an instance metadata identifier (IMI) for identifying the content reference identifier; and
acquiring the components using the content reference identifier and the instance metadata identifier of the metadata.

24. The package consuming method as recited in claim 23, wherein the instance metadata identifier identifies locations of the components.

25. The package consuming method as recited in claim 23, wherein the instance metadata identifier identifies different bit expression instances of the components.

26. The package consuming method as recited in claim 25, wherein the bit expression is any one selected from a group consisting of a coding format, a bit rate and an aspect ratio.

27. The package consuming method as recited in claim 25, wherein the components are a plurality of components having identical contents and the content reference identifier is identical to the plurality of components.

28. The package consuming method as recited in claim 23, wherein instances of the components are located in different locations.

29. The package consuming method as recited in claim 28, wherein the instance metadata identifier is listed in the metadata.

30. The package consuming method as recited in claim 28, wherein the components are a plurality of components having identical contents and the content reference identifier is identical to the plurality of components.

31. The package consuming method as recited in claim 23, wherein the metadata is received by using a one-way broadcasting system or two-way system through an internet protocol (IP) network.

32. A user terminal for consuming a package which is a set of components, comprising:
a receiving unit for receiving metadata including a content reference identifier (CRID) for identifying the components and an instance metadata identifier (IMI) for identifying the content reference identifier; and
an acquiring unit for acquiring the components using the content reference identifier and the instance metadata identifier of the metadata.

33. The user terminal as recited in claim 32, wherein the instance metadata identifier identifies locations of the components.

34. The user terminal as recited in claim 32, wherein the instance metadata identifier identifies different bit expression instances of the components.

35. The user terminal as recited in claim 34, wherein the bit expression is any one selected from a group consisting of a coding format, a bit rate and an aspect ratio.

36. The user terminal as recited in claim 34, wherein the components are a plurality of components having identical contents and the content reference identifier is identical to the plurality of components.

37. The user terminal as recited in claim 32, wherein instances of the components are located in different locations.

38. The user terminal as recited in claim 37, wherein the instance metadata identifier is listed in the metadata.

39. The user terminal as recited in claim 37, wherein the components are a plurality of components having identical contents and the content reference identifier is identical to the plurality of components.

40. The user terminal as recited in claim 32, wherein the metadata is received by using a one-way broadcasting system or two-way system through an internet protocol (IP) network.

41. A metadata for providing a package which is a set of components, comprising:
a content reference identifier (CRID) for identifying the components; and
an instance metadata identifier (IMI) for identifying the content reference identifier.

42. The metadata as recited in claim 41, wherein the instance metadata identifier identifies locations of the components.

43. The metadata as recited in claim 41, wherein the instance metadata identifier identifies different bit expression instances of the components.

44. The metadata as recited in claim 43, wherein the bit expression is any one selected from a group consisting of a coding format, a bit rate and an aspect ratio.

45. The metadata as recited in claim 43, wherein the components are a plurality of components having identical contents and the content reference identifier is identical to the plurality of components.

46. The metadata as recited in claim 41, wherein instances of the components are located in different locations.

47. The metadata as recited in claim 46, wherein the instance metadata identifier is listed in the metadata.

48. The metadata as recited in claim 46, wherein the components are a plurality of components having identical contents and the content reference identifier is identical to the plurality of components.
